# EUROPEAN PATENT APPLICATION

(11) **EP 2 000 208 A2**
(43) Date of publication of application: **10.12.2008**
(21) Application number: 07739329.6
(22) Date of filing: 22.03.2007
(51) Int. Cl.: B01J 35/02

(54) **VISIBLE LIGHT RESPONSE-TYPE TITANIUM OXIDE PHOTOCATALYST, METHOD FOR MANUFACTURING THE VISIBLE LIGHT RESPONSE-TYPE TITANIUM OXIDE PHOTOCATALYST, AND USE OF THE VISIBLE LIGHT RESPONSE-TYPE TITANIUM OXIDE PHOTOCATALYST**

(30) Priority: 30.03.2006 JP 2006095064
(71) Applicant: OSAKA Titanium Technologies Co., Ltd., Amagasaki-shi, Hyogo 660-8533 (JP)
(72) Inventor: MASAKI, Yasuhiro, Osaka-shi, Osaka 541-0041 (JP); NISHIHARA, Katsuhiro, Osaka-shi, Osaka 541-0041 (JP); FUKUDA, Tadashi, Osaka-shi, Osaka 541-0041 (JP); OKADA, Katsumi, Osaka-shi, Osaka 541-0041 (JP); TASAKA, Masahito, Osaka-shi, Osaka 541-0041 (JP); SHIMOSAKI, Shinji, 1Higashihamacho Amagasaki-shi Hyogo0660-8533 (JP); KANNO, Hideaki, H1HigashihamachoAmagasaki-shi, Hyogo 660-8533 (JP); NAGAOKA, Sadanobu, 1 HigashihamachoAmagasaki-shi, Hyogo 660-8533 (JP); AZUMA, Kazuomi, Amagasaki-shi, Hyogo 660-8533 (JP); OGASAWARA, Tadashi, Amagasaki-shi, Hyogo 660-8533 (JP)
(74) Representative: Ahner, Francis
(86) International application number: PCT/JP2007/055886
(87) International publication number: WO 2007/119489

(57) **Abstract**

A titanium oxide photocatalyst responsive to visible light which can exhibit a high photocatalytic activity in response to visible light is produced by subjecting titanium oxide and/or titanium hydroxide obtained by neutralizing an acidic titanium compound with a nitrogen-containing base to heat treatment in an atmosphere containing a hydrolyzable metal compound (e.g., a titanium halide) and then to additional heat treatment in a gas having a moisture content of 0.5 - 4.0 volume % at a temperature of 350° C or above. The photocatalyst which is a nitrogen-containing titanium oxide has no9 substantial peak at a temperature of 600° C or above in a mass fragment spectrum obtained by thermal desorption spectroscopy in which the ratio m/e of the mass number m to the electric charged e of ions is 28, and the peak having the smallest half band width is in the range of 400 - 600° C in the spectrum. The nitrogen content calculated from the peak appearing at 400 eV ∀ 1.0 eV in the N1s shell bonding energy spectrum obtained by XPS measurement of this photocatalyst is at least 20 times larger than the nitrogen content obtained by chemical analysis.

## Description

### Technical Field

This invention relates to a highly active titanium oxide photocatalyst responsive to visible light which can exhibit high photocatalytic activity when irradiated by not only ultraviolet light but also visible light and to a process for producing the same. The present invention also relates to a photocatalytic functional member responsive to visible light, a dispersion, and a coating fluid which utilize this photocatalyst.

### Background Art

In recent years, development of a titanium oxide photocatalyst which exhibits a photocatalytic activity in response not only to ultraviolet light but also to visible light is being pursued with the purpose of using the photocatalyst indoors or under weak light. Titanium oxide photocatalysts which exhibit responsiveness to visible light include metal ion doped types, oxygen defect types, nitrogen (nitrogen compound) doped types, and the like.

Concerning nitrogen (nitrogen compound) doped types, it is reported in Chem. Phys. Lett. 123, 126 (1986) and App. Cat. A: General, 284, 131 (2005) that if titanium hydroxide prepared by the wet process is calcined, titanium oxide is doped with NO and becomes a photocatalyst which is responsive to visible light. JP 2001-205103 A1 discloses a titanium oxide photocatalyst responsive to visible light which has a Ti-N bond and which is produced by the dry process. JP 2004-75528 A1 reports a titanium oxide photocatalyst characterized in that the desorption peak of the component for which m/e = 28 in a mass fragment spectrum obtained by the simultaneous thermogravimetric/mass spectrometric measurement method is at a temperature of 600° C or higher.

### Disclosure of Invention

Doping of titanium oxide with nitrogen or a nitrogen oxide is effective as a means for providing titanium oxide with an activity in response to visible light (visible light activity). However, since the content of nitrogen in titanium oxide, the state of nitrogen present therein, and other factors were not optimized, it was not possible with this technique to obtain a titanium oxide photocatalyst having sufficient visible light activity in a reliable manner.

The object of the present invention is to provide a titanium oxide photocatalyst which can exhibit a high photocatalytic activity upon irradiation by visible light, a process for its production which is suitable for mass production, a functional member having this photocatalyst deposited on the surface of a substrate, and a coating fluid.

As a result of investigating optimization of the state and content of nitrogen present in titanium oxide in order to achieve an increased visible light activity, the present inventors found that a titanium oxide photocatalyst responsive to visible light exhibits an increased visible light activity when it has no substantial peak having a half band width of at most 300° C at a temperature higher than 600° C and its peak having the smallest half band width appears in the temperature range from 400 - 600° C in its mass fragment spectrum measured in the temperature range from room temperature to 800° C by thermal desorption spectroscopy (TDS) in which the ratio m/e of the mass number m to the electric charge e of ions is set to 28.

In a preferred embodiment, the peak having the smallest half band width is a sharp peak with a half band width of at most 100° C, and more preferably, the peak having the smallest half band width is the peak located at the highest temperature in the mass spectrum. As a result, a higher visible light activity can be exhibited.

Thermal desorption spectroscopy is an analytical method in which a sample placed in a vacuum chamber is heated to increase its temperature, and gaseous fragments which are generated by the sample during the temperature increase are detected by a mass spectrometer. According to the detection system of the mass spectrometer, either a mass fragment spectrum (also referred to as a mass chromatogram) which measures only the spectrum with a specific mass number or a scan spectrum which performs measurement for all mass numbers can be obtained.

The source of peaks which appear in a mass fragment spectrum measured by thermal desorption spectroscopy for m/e = 28 is nitrogen molecules (N₂). Namely, these peaks occur due to desorption of nitrogen molecules. These nitrogen molecules are not nitrogen in air which is adsorbed by the surface of the titanium oxide but are thought to be due to desorption of nitrogen compounds contained in the structure of the titanium oxide. Examples of such nitrogen compounds include nitrogen, nitrogen oxide, and ammonia.

In the present invention, thermal desorption spectroscopy is carried out under conditions of a vacuum of 10⁻⁶ torr or lower and a rate of temperature increase of at most 10° C per minute. Of course, a peak in a mass fragment spectrum obtained by thermal desorption spectroscopy is a desorption peak (a peak caused by a desorbed component). The temperature of measurement in thermal desorption spectroscopy is from room temperature to 800° C. This is because noises may become too large if the measurement temperature exceeds 800° C.

A broad peak with a half band width of greater than 300° C which occurs in a mass fragment spectrum for m/e = 28 at a temperature higher than 600° C is a peak which is caused by base line turbulence or the like, and it is not a substantial peak related to the catalyst which is measured. Therefore, apart from such a peak which should be ignored, one requirement of the present invention is that no substantial peak (a peak having a half band width of at most 300° C) is present at a temperature above 600° C.

The nitrogen content of the photocatalyst (the nitrogen content of the entire catalyst determined by chemical analysis) is preferably not greater than 0.1 weight %. If the photocatalyst has a nitrogen content above this level, its photocatalytic activity decreases and it tends to have an appreciable color, making color adjustment difficult when the photocatalyst is made into a commercial product.

Although the structure of a titanium oxide photocatalyst according to the present invention has not been completely elucidated, the desorption behavior shown by a mass fragment spectrum for m/e = 28 obtained by thermal desorption analysis reflects the state (the desorption behavior) of nitrogen contained in the catalyst. It is essential for this mass fragment spectrum to have a peak prescribed by the present invention in order for the catalyst to exhibit a high activity.

The term Aphotocatalyst responsive to visible light≅ as used herein indicates a catalyst which absorbs light radiations having a wavelength of 410 nm or longer and which can exhibit at least measurable photocatalytic activity, even though there is a difference in extent, by absorption of such radiations. This type of photocatalyst is distinct from a typical titanium oxide photocatalyst responsive to ultraviolet light (such as ST-01 manufactured by Ishihara Sangyo Kaisha, Ltd.).

A titanium oxide photocatalyst according to the present invention can be produced by a process in which a raw material selected from titanium oxide and its precursors is heat treated in an atmosphere containing a hydrolyzable metal compound (such as a hydrolyzable titanium compound), and then the heat-treated material is further heat treated in a gas having a moisture content in the range of 0.5 - 4.0 volume % at a temperature of 350° C or higher.

A preferred raw material used in this process is titanium oxide and/or titanium hydroxide (including hydrous titanium oxide) obtained by a method comprising neutralizing an aqueous solution of an acidic titanium compound such as titanium tetrachloride or titanium sulfate with a nitrogen-containing base such as ammonia so that the pH of the reaction mixture at the end of reaction is equal to or lower than 7. This neutralization is preferably carried out so that when the reaction mixture at the end of the neutralization reaction is aged by allowing to stand for 72 hours at 20° C, the decrease in the pH between before and after aging is not greater than 0.5.

When a spectrum assigned to nitrogen was investigated by XPS (X-ray photoelectron spectroscopy) for a titanium oxide photocatalyst responsive to visible light produced by the above-described process, it was found that the nitrogen content calculated based on the peak appearing in the range of 400 eV ∀ 1.0 eV in an N1s shell bonding energy spectrum was at least 20 times as large as the nitrogen content determined by chemical analysis.

Namely, a titanium oxide photocatalyst responsive to visible light according to the present invention can be identified without thermal desorption spectroscopy by preparing an N1s shell bonding energy spectrum by XPS measurement, calculating the nitrogen content based on the peak appearing in the range of 400 eV ∀ 1.0 eV in this spectrum, and ascertaining whether the calculated nitrogen content is at least 20 times larger than the nitrogen content calculated from chemical analysis. Of course, it is possible to carry out identification of a titanium oxide photocatalyst according to the present invention by both of these methods.

XPS measurement is a kind of surface analysis method in which portions closest to the surface of a substance are analyzed. In contrast, chemical analysis gives an average value for an entire substance. Accordingly, the fact that the nitrogen content calculated based on an XPS spectrum is at least 20 times the nitrogen content calculated from chemical analysis means that nitrogen is locally concentrated at the surface.

XPS measurement is sometimes carried out while removing the surface by laser sputtering. In this case, the nitrogen content is calculated based on the above-described peak in the XPS spectrum measured before sputtering and is compared with the nitrogen content calculated from chemical analysis. A chemical analysis value can be determined by mass spectrometry, but in the present invention, it is a value found by a chemical analysis method such as the Kjeldahl method as described below. In general, the content of an element found by XPS measurement is expressed in atomic %, whereas in chemical analysis, the content is determined in weight %. Therefore, before comparison takes place, the units for the nitrogen content must be made uniform.

A titanium oxide photocatalyst responsive to visible light according to the present invention has a clear peak only in the range of 400 eV ∀ 1 eV in an N-1s shell bonding energy spectrum obtained by XPS measurement. As indicated in a document [App. Cat. A: General, 284, 131 (2005)], this peak is derived from nitrogen in an oxidized state, i.e., from NO. On the other hand, a titanium oxide photocatalyst according to the present invention does not have a peak in the range of 396 - 397 eV which is thought to be derived from a Ti-N bond.

A process for producing a titanium oxide photocatalyst responsive to visible light according to the present invention is not limited to the above-described process.

Other processes can be utilized so long as it can produce a titanium oxide photocatalyst in which the mass fragment spectrum for m/e = 28 in the above-described thermal desorption spectroscopy satisfies the conditions defined by the present invention, or in which the nitrogen content determined as described above by XPS measurement and preferably the nitrogen content determined by chemical analysis satisfy the conditions defined by the present invention.

A titanium oxide photocatalyst according to the present invention can be utilized in various forms such as powders, coatings (including thin film coatings), fluid compositions, or fibers. In particular, a form in which this photocatalyst is deposited on the surface of a substrate so as to fix thereon can be utilized as a photocatalytic functional member having a photocatalytic activity in response to visible light.

A preferred photocatalytic functional member has a coating on the surface of a substrate in which the coating contains the above-described titanium oxide photocatalyst in a binder component such that the content of the titanium oxide photocatalyst in the coating is in the range of 5 - 95 mass percent.

The present invention also provides a photocatalyst dispersion and a coating fluid which can be used to prepare a photocatalytic functional member as described above.

A photocatalytic functional member responsive to visible light according to the present invention can be prepared by a method comprising applying the above-described coating fluid to the surface of a substrate such as a metal sheet or other substrate. In another method, a photocatalytic functional member responsive to visible light according to the present invention can be prepared by depositing a raw material selected from titanium oxide and its precursors on the surface of a heat-resistant substrate, then subjecting the substrate to heat treatment in an atmosphere containing a hydrolyzable metal compound, and then subjecting it to additional heat treatment at a temperature of 350° C or higher in a gas having a prescribed moisture content.

According to the present invention, a highly active titanium oxide photocatalyst which stably exhibits a high photocatalytic activity when irradiated with visible light and a photocatalytic functional member using this photocatalyst are provided. The photocatalyst and photocatalytic functional member can be efficiently and reliably produced by a process suitable for mass production.

### Brief Description of the Drawings

Figure 1 is a mass fragment spectrum for m/e = 28 in thermal desorption spectroscopy of the titanium oxide photocatalyst obtained in Example 1.
Figure 2 is mass fragment spectrum for m/e = 28 in thermal desorption spectroscopy of the commercially available titanium oxide photocatalyst responsive to visible light used in Comparative Example 1.
Figure 3 is a graph showing the relationship between the moisture content of the atmosphere for the second step heat treatment (calcination) and the activity of the resulting titanium oxide photocatalyst.
Figure 4 is a mass fragment spectrum for m/e = 28 in thermal desorption spectroscopy of a titanium oxide photocatalyst produced under conditions outside the range of the present invention.
Figure 5 shows an XPS spectrum for the N-1s inner shell level of the titanium oxide photocatalysts of Example 4 and Comparative Example 4 prior to sputtering.
Figure 6 shows light absorption spectra of the titanium oxide photocatalysts of Example 4 and Comparative Example 4 and of the titanium hydroxide used as a raw material.

### Best Mode for Carrying Out the Invention

A titanium oxide photocatalyst responsive to visible light according to the present invention has a unique behavior with respect to the peak (desorption peak) in a mass fragment spectrum (which as stated earlier indicates the desorption behavior of nitrogen) obtained by thermal desorption spectroscopy in which the ratio (m/e) of the mass number m to the electric charge e of ions is set to 28.

Specifically, in a mass fragment spectrum for m/e = 28, a substantial peak does not appear at a temperature higher than 600° C, and the peak having the smallest half band width appears in the temperature range from 400 - 600° C. As stated above, a substantial peak means a peak having a half band width of 300° C or less.

In JP 2004-75528 A1, it is essential that the mass chromatogram for the component for which m/e = 28 in simultaneous thermogravimetry/mass spectroscopy have a desorption peak at 600° C or above. This indicates that the state of nitrogen in the catalyst is completely different in a titanium oxide photocatalyst according to the present invention and in that patent document. A titanium oxide photocatalyst according to the present invention has higher visible light-responsive catalytic activity than one having a substantial peak at a temperature higher than 600° C like the catalyst described in that patent document. Simultaneous thermogravimetry/mass spectroscopy and thermal desorption spectroscopy both carry out weight analysis of gas components while heating. In the former, analysis is primarily carried out at atmospheric pressure in a carrier gas such as helium, while in the latter it is primarily carried out in a vacuum.

It is thought that one possible meaning of the fact that the peak having the smallest half band width appears in the range of 400 - 600° C is that nitrogen is incorporated into the crystal structure of the titanium oxide having high crystallinity, resulting in a high catalytic activity with visible light.

In the present invention, it is extremely desirable that the peak having the smallest half band width which is located in the range from 400 - 600° C be sharp as evidenced by its half band width which is 100° C or less. Such a narrow half band width of a desorption peak means that nitrogen or a nitrogen compound in the catalyst is present in titanium oxide in a highly uniform state.

In addition, it is preferred that the peak having the smallest half band width correspond to the peak appearing at the highest temperature in the mass fragment spectrum for m/e = 28. This indicates that nitrogen which is effective for producing visible light activity is strongly bonded to titanium oxide.

The above-described desorption behavior of nitrogen molecule in a mass fragment spectrum for m/e=28 also applies to desorption peaks in a mass fragment spectrum for m/e = 14 which corresponds to a nitrogen atom. Namely, in a mass fragment spectrum for m/e = 14, if there is no substantial peak (a peak with a half band width of 300° C or less) at a temperature higher than 600° C and the peak having the smallest half band width is in the range of from 400 - 600° C and the half band width of the peak having the smallest half band width is preferably at most 100° C and more preferably the peak having this smallest half band width corresponds to the peak located at the highest temperature, it becomes a titanium oxide photocatalyst having high visible light activity. However, a mass fragment spectrum for m/e = 14 has a lower peak intensity compared to that for m/e = 28, so it is more difficult to evaluate. Therefore, in the present invention, evaluation is performed using a mass fragment spectrum for which m/e = 28.

In a spectrum obtained by thermal desorption spectroscopy, a plurality of peaks sometimes overlap. In this case, peak information (peak temperature, half band width, and the like) is obtained after performing suitable peak separation processing using commercially-available software.

A photocatalyst responsive to visible light according to the present invention provides a unique characteristic also in XPS analysis. Namely, it is characterized in that the nitrogen content calculated based on the peak which appears in the range of 400 eV ∀ 1.0 eV in an N1s shell bonding energy spectrum obtained by XPS measurement is extremely large in such a manner that this nitrogen content is at least 20 times as large compared with the nitrogen content calculated by chemical analysis. As described previously, this characteristic means that nitrogen is unevenly distributed so as to concentrate at the surface in a titanium oxide photocatalyst according to the present invention.

In this XPS spectrum, a titanium oxide photocatalyst responsive to visible light according to the present invention has a clear peak only in the range of 400 eV ∀ 1 eV. This peak is derived from NO (nitrogen in an oxidized state). On the other hand, in the above-described XPS spectrum of a titanium oxide photocatalyst according to the present invention, there is no peak in the range of 396 - 397 eV corresponding to a Ti-N bond. From this fact, it is conjectured that nitrogen in a photocatalyst according to the present invention is not present as a Ti-N bond, but is present primarily as a N-O bond as in a state in which it substitutes for Ti or is present in the lattice of TiO₂.

Considering the results of this XPS analysis together with the results of thermal desorption spectroscopy, it is conjectured that the N in the titanium oxide is present in a considerably uniform state of chemical bonding and is concentrated in the vicinity of the surface of titanium oxide.

As is clear from the above explanation of the results of thermal desorption spectroscopy and the spectrum in XPS measurement, a titanium oxide photocatalyst according to the present invention is a catalyst containing nitrogen in titanium oxide. As described above, the nitrogen content determined by XPS measurement is the content at a location near the surface. The nitrogen content of the overall photocatalyst is determined by chemical analysis. In the present invention, the nitrogen content determined by chemical analysis means the nitrogen content measured by a chemical analysis method such as the Kjeldahl method, which is a typical nitrogen analysis method. In the Kjeldahl method, a nitrogen-containing sample is decomposed with an acid in the presence of a kicker (decomposition promoter). An alkali is added to the resulting decomposition product to liberate ammonia, which is then captured by distillation and titrated to determined the amount of ammonia, from which the nitrogen content of the sample is calculated. There is no restriction on the method of determining the nitrogen content as long as it is a chemical analysis method which can dissolve and extract all of the nitrogen.

The nitrogen content of the photocatalyst (the value obtained by chemical analysis of nitrogen) is preferably at most 0.1 weight %. If the nitrogen content exceeds 0.1 weight %, its catalytic activity in response to visible light decreases. This is thought to be because as the nitrogen content increases, the absorption strength of the photocatalyst in the visible light range increases, but this can serve as a recombination center resulting in a decrease in the efficiency of electric charge separation. The nitrogen content of the photocatalyst is more preferably at most 0.05 weight %. With a nitrogen content of 0.05 weight % or below, the coloration of the catalyst is appropriate, and high visible light activity is obtained. There is no particular restriction on the lower limit of the nitrogen content, but preferably it is at least 0.001 weight %.

Introduction of nitrogen into a titanium oxide photocatalyst can be performed during the production of titanium oxide, for example, by a method of preparing a raw material by neutralization of an acidic titanium compound using a nitrogen-containing base, a method in which heat treatment is carried out in a nitrogen gas atmosphere, a combination of these, or the like. There is no limitation on a method of introducing (doping with) nitrogen as long as the method can obtain titanium oxide which satisfies the conditions that the mass fragment spectrum for m/e = 28 exhibits a peak according to the present invention and/or the nitrogen content determined from the N1s shell bonding energy spectrum in XPS measurement satisfies the conditions according to the present invention. However, according to findings thus far, particularly effective is a method of introducing nitrogen into a raw material by neutralization with a nitrogen-containing base.

The crystallographic structure of a titanium oxide photocatalyst according to the present invention may be crystalline or amorphous, or it may be a mixture of both. When the photocatalyst comprises crystalline titanium oxide, possible crystal forms include anatase, rutile, and brookite. It may comprise any one of these, or two or more of these may be mixed together. The titanium oxide may also have oxygen defects. In order to achieve the highest photocatalytic visible light activity, the titanium oxide is advantageously crystalline, and its structure is preferably anatase and/or rutile, with anatase being more preferable.

A titanium oxide photocatalyst according to the present invention can be produced by subjecting a raw material in the form of titanium oxide or its precursor to heat treatment, or by chemical vapor deposition or wet process synthesis. Among these methods, a method in which a raw material which is either titanium oxide or its precursor is subjected to heat treatment is preferred.

Titanium oxide which is used as a raw material may be any type of titanium oxide, including synthesized titanium oxide and commercially available titanium oxide. A precursor of titanium oxide indicates any titanium compound in which its main structure can be converted into titanium oxide by heat treatment. Such a precursor includes titanium hydroxide, hydrous titanium oxide, and various hydrolyzable titanium compounds. Specific examples of hydrolyzable titanium compounds include chlorinated titanium compounds such as titanium oxychloride and titanium chloride, titanium alkoxides and their partial hydrolysates, and the like. Since there is no clear boundary between titanium hydroxide and hydrous titanium oxide, "titanium hydroxide" as used herein includes hydrous titanium oxide.

When the raw material is titanium oxide or titanium hydroxide, its form may be crystalline, amorphous, or a mixture of these. A particularly preferred raw material is titanium hydroxide, titanium oxide, or both (referred to below collectively as titanium (hydro)oxide) obtained by neutralization of an aqueous solution of at least one acidic titanium compound such as titanyl sulfate, titanium sulfate, or titanium tetrachloride (which may contain a small amount of an organic solvent and particularly a water-miscible organic solvent) with a nitrogen-containing base such as ammonia or an amine. Generally, neutralization causes precipitation of titanium hydroxide, and the precipitates can be collected after neutralization and dried to obtain titanium (hydr)oxide which can be used as a raw material.

In the titanium (hydr)oxide prepared in this manner, the nitrogen-containing compound used for neutralization is incorporated as it is or usually in a different form which may be ionized or form a reaction product such as ammonium titanate. As a result, titanium oxide which contains nitrogen is obtained after heat treatment of the titanium (hydr)oxide. The pH at the end of neutralization may be acidic, neutral, or alkaline. However, if neutralization proceeds until the pH is alkaline, the nitrogen concentration of the resulting raw material becomes excessively high, and the catalyst obtained after heat treatment may contain a large amount of nitrogen. Therefore, it is necessary to control the conditions in the subsequent heat treatment so as to adjust the nitrogen content at a suitable value, thereby causing heat treatment operations to be complicated and decreasing the production efficiency. On the other hand, if the pH at the end of neutralization is 7 or less, the nitrogen content of the resulting titanium (hydr)oxide becomes suitable, and a photocatalyst having a high activity in response to visible light is obtained by usual heat treatment. Therefore, the pH at the end of neutralization is preferably 7 or less and more preferably it is from 3.5 - 7.

A raw material used in the present invention is preferably titanium (hydr)oxide obtained by carrying out a neutralization reaction such that the reaction mixture obtained after completion of the neutralization reaction is allowed to stand for 72 hours at 20° C for aging, the decrease in pH between before and after aging is at most 0.5. If neutralization is incomplete, when the reaction mixture is allowed to stand for aging after the neutralization reaction, unreacted acidic hydrolyzable titanium compound is hydrolyzed, which causes a decrease in pH of the reaction mixture. Accordingly, the magnitude of this decrease in pH is an indicator of the completeness of the neutralization reaction. If titanium (hydr)oxide obtained from a reaction mixture for which neutralization was incomplete with a large decrease in pH is used as a raw material, a photocatalyst having sufficiently high visible light activity is not obtained in many cases. Therefore, a raw material is preferably used which is sufficiently hydrolyzed such that the change in pH during aging for 72 hours at 20° C of the reaction mixture at the end of neutralization is at most 0.5, whereby a highly active catalyst responsive to visible light can be obtained more reliably.

In an actual production process of a titanium oxide photocatalyst according to the present invention, it is not necessary to perform aging by allowing the reaction mixture to stand (for 72 hours at 20° C) after the neutralization reaction. This aging is simply for evaluating the completeness of neutralization. To begin with, conditions for neutralization is set and a neutralization trial is carried out under the set conditions to give a reaction mixture, which is then subjected to aging for 72 hours or longer. After it is ascertained with this reaction mixture that the decrease in pH between before and after aging is at most 0.5, the same conditions can be used for neutralization afterwards.

The raw material titanium oxide or its precursor is subjected to heat treatment in an atmosphere containing a hydrolyzable metal compound. Below, this heat treatment will be referred to as a first step heat treatment. As a result of this heat treatment, the hydrolyzable metal compound in the atmosphere reacts with and is bonded to the surface of the titanium oxide or hydroxide raw material. After the first step heat treatment, optionally the heat-treated material may be brought into contact with water to hydrolyze the hydrolyzable compound bonded to the surface. A second step heat treatment is then carried out at a temperature of 350° C or higher in a gas having a moisture content in the range of 0.5 - 4.0 volume %, thereby producing a titanium oxide photocatalyst according to the present invention which exhibits high photocatalytic visible light activity and satisfies the above-described conditions for a desorption peak.

As the hydrolyzable metal compound contained in the atmosphere in the first step heat treatment, it is preferable to use a hydrolyzable titanium compound including a titanium chloride such as titanium tetrachloride, titanium trichloride, or titanium oxychloride; a titanium salt such as titanium sulfate, titanyl sulfate, or titanium fluoride; and a titanium alkoxide such as titanium butoxide or titanium isoproxide. However, it is also possible to use a halide of an element other than titanium such as SnCl₄, SiCl₄, or BiCl₄ or other hydrolyzable metal compound. It is preferable to use a hydrolyzable compound which exhibits a vapor pressure such that a sufficient amount of vapor is formed at the temperature of the first step heat treatment.

The heating temperature in the first step heat treatment can be selected in a wide range of 50 - 600° C. A more preferred temperature range is 100 - 400° C. If the temperature in the first step heat treatment is too low, a reaction between the raw material and the hydrolyzable metal compound may not adequately take place, while if the heat treatment temperature is too high, the titanium oxide may be excessively reduced, thereby causing the photocatalytic activity to decrease.

There is no particular restriction on the atmosphere in which a hydrolyzable metal compound is contained. For example, it may be one or more selected from hydrogen, argon, nitrogen, carbon monoxide, ammonia, oxygen, water vapor (steam), nitrogen oxide, nitrogen dioxide, air, and the like. Thus, it may be an oxidizing, reducing, or inert atmosphere. An atmosphere of air is satisfactory, taking cost into consideration. The content of the hydrolyzable metal compound in the atmosphere is limited depending on the temperature of the atmosphere and the vapor pressure of the compound, but generally it is preferably at most 10 volume percent. There is no particular restriction on the lower limit of this content, but if the content is too low, the amount of the hydrolyzable metal compound which reacts with the raw material surface becomes low. Therefore, preferably it is at least 0.1 volume percent and more preferably at least 0.5 volume percent.

If desired, after the first step heat treatment, the raw material which has been subjected to the first step heat treatment may be brought into contact with water. As a result, the hydrolyzable metal compound (such as a halide) which reacted with and bonded to the surface undergoes hydrolysis whereby the halogen groups on the surface are converted into OH groups. This contact treatment can be carried out by immersing the raw material in water with or without stirring. Alternatively, another method such as spraying with water may be used. The water which is used may be pure water, but it is also possible to use waster containing a nitrogen-containing base such as ammonia. The temperature of this treatment may conveniently be room temperature, but it is also possible to carry out this treatment while heating or cooling. Contacting with water can also be carried out by a method in which the raw material is heated in an atmosphere containing a component which generates water vapor or water. When contacting with water, the raw material is dried as needed before the subsequent second step heat treatment is performed thereon.

The atmosphere for the second step heat treatment can be any non-reducing atmosphere, and it can be an oxygen-containing atmosphere including air, a vacuum, or an inert atmosphere. A reducing atmosphere is undesirable since it has a tendency to produce a product having a decreased catalytic visible light activity. A titanium oxide photocatalyst which exhibits a mass fragment spectrum in thermal desorption spectroscopy or an XPS spectrum according to the present invention can be obtained even if the atmosphere for the second step heat treatment does not contain nitrogen, but a low-cost atmosphere containing nitrogen such as air or nitrogen gas is preferred.

It is important to carry out the second step heat treatment in the present invention in a gas atmosphere containing 0.5 - 4.0 volume % of moisture at a temperature of 350° C or higher. Outside of this range, the visible light activity of the resulting photocatalyst decreases, and a highly active catalyst is not obtained. The reason why has not yet been determined, but it is thought to be as follows. It is thought that nitrogen is incorporated into the catalyst during the second step heat treatment, and if there is too much moisture in the atmosphere at this time, it primarily reacts with a nitrogen compound, whereas if the amount of moisture is appropriate, nitrogen remains in the catalyst, thereby producing a product having a mass fragment spectrum in thermal desorption spectroscopy or a spectrum in the XPS analysis according to the present invention.

The temperature of the second step heat treatment is at least 350° C and preferably at least 400° C, while the upper limit thereof is preferably at most 600° C.

If the heat treatment temperature is lower than 350° C, the two-step heat treatment provides almost no effect. On the other hand, if the heat treatment temperature is too high, desorption of nitrogen from the catalyst occurs, and a product having sufficient photocatalytic visible light activity cannot be obtained. A preferred heat treatment temperature for the second step is 400 - 500° C. The duration of heat treatment depends upon the temperature and the type of raw material (whether it is a precursor or titanium oxide), but normally it is from 30 minutes to 6 hours for both the first step and the second step.

A titanium oxide photocatalyst responsive to visible light according to the present invention may be supported on a substance which is not substantially susceptible to photocatalytic action of titanium oxide, such as silica, alumina, zeolilte, or inactive titania. In addition, in order to increase the efficiency of reaction, the photocatalyst may be doped with a promoter which may be a precious metal such as platinum, ruthenium, or palladium or a transition metal such as iron or nickel. In addition, a ceramic such as silica, alumina, niobium oxide, or iron oxide may be added as a co-oxide. Namely, a titanium oxide photocatalyst includes such a photocatalyst in which the titanium oxide contains a dopant and/or co-oxide.

The photocatalyst may be in the form of particles, fibers, thin film coatings, or the like in accordance with the use. When it is in particulate form, it can range from fine powder on the order of nanometers in size to granules on the order of several millimeters in size, and the size and shape of the particles are not limited. When the photocatalyst is a coating, it is typically fixed on the surface of a substrate, and its thickness is not restricted. When forming the catalyst into a desired shape such as a coating or a fiber, it is preferable to add a shaping aid or a binder to the particles of a titanium oxide photocatalyst according to the present invention. Addition of such a material makes it possible to increase the coating thickness or fiber diameter and to increase the strength and workability of a coating or fibers.

A titanium oxide photocatalyst according to the present invention can be utilized as a photocatalytic functional member by depositing it for fixation on the surface of a substrate. The shape of the catalyst used for fixation can be selected depending on various factors such as the surface contour of the substrate and the use of the member, and are not particularly limited. However, typically it is in the form of a coating (including a thin film coating).

The substrate may be made of any material including a metal such as carbon steel, plated steel, chromate treated steel, enameled ware, stainless steel, titanium, aluminum, and the like; inorganic materials such as ceramics, glass, porcelain, and quartz; and organic materials such as plastics, resins, and activated carbon. It may also be a material which combines these such as a precoated steel sheet. When the entirety or the surface of the substrate is made of an organic material, the organic material may be deteriorated or decomposed by the oxidizing force of the photocatalyst. In such a case, preferably the surface of the substrate is previously coated using a material which is not decomposed by a photocatalyst. However, when the light energy is weak, it is sometimes unnecessary to provide such a coating in advance. Therefore, the coating design can be decided in accordance with the actual environment of use.

There is no particular limitation on the shape of the substrate, and it may be a sheet, a plate, fibers (including woven or knitted fabric and non-woven fabric), a mesh, a tube, or the like. It may be a complicated shape which is used as manufactured, or it may be a member which is already installed or in use. The surface of the substrate may be porous or dense.

A photocatalytic functional member responsive to visible light according to the present invention can be produced by (1) a method in which a dispersion or coating fluid comprising particles of a titanium oxide photocatalyst responsive to visible light according to the present invention dispersed in a solvent is applied to a substrate or (2) a method in which titanium oxide which has not been heat-treated or a precursor thereof is deposited on a substrate, and the same type of two-step heat treatment as described with respect to a process of producing a photocatalyst is carried out on the surface of the substrate.

The first method using a coating fluid (coating composition) will be explained. A coating fluid may consist substantially of a photocatalyst and a dispersion medium (a medium), but preferably it also contains a binder.

It is possible to prepare a coating fluid by simply thoroughly mixing a titanium oxide photocatalyst according to the present invention with a medium and a binder. However, a titanium oxide photocatalyst produced by the above-described process is generally in the form of very fine particles having an average primary particle diameter of from several nanometers to 100 nanometers. Therefore, it tends to agglomerate very easily, and once agglomeration occurs, the resulting agglomerates have a diameter as large as several tens of micrometers and become difficult to be uniformly dispersed in a medium.

Therefore, in a preferred embodiment of the present invention, particles of a titanium oxide photocatalyst are previously thoroughly dispersed in a medium to prepare a dispersion of photocatalyst particles. It is preferred to prepare a coating fluid using this dispersion by adding a binder thereto. In this manner, it becomes possible to form a thinner and more uniform photocatalyst coating having improved coating properties and photocatalytic activity.

The average particle diameter of the photocatalyst in the dispersion (the particle diameter of the agglomerates) is preferably at most 500 nm. A larger particle diameter produces powdering of the coating and causes the storage stability of the dispersion to decrease. The average particle diameter of the photocatalyst in the dispersion is more preferably at most 300 nm and still more preferably at most 200 nm.

Examples of a medium in which photocatalyst particles are dispersed include water such as distilled water, deionized water, and ultrapure water; alcohols such as methanol, ethanol, and 2-propanol; ketones such as methyl ethyl ketone; aromatic hydrocarbons such as benzene, toluene, and xylene, and the like. A mixture of two or more of these solvents can be used as long as they are miscible with each other.

Dispersion treatment is preferably carried out by mixing the photocatalyst with the medium so that the solids content of the resulting dispersion is in the range of several mass percent to 30 mass percent. If the solids content is outside of this range, dispersibility sometimes decreases. If necessary, a dispersing agent or a deflocculant may be added. An example of a dispersing agent is a carbonyl type or a sulfone type, and an example of a deflocculant is an acid such as hydrochloric acid or sulfuric acid. A base or an acid may be added in order to adjust the pH of the dispersion.

The dispersion treatment may be carried out using a paint shaker which is conventionally used for preparing coating fluids, but it is preferably carried out by a stronger dispersing means such as a media mill, application of a shearing force using a rotating blade, thin film swirling, or ultrasonic waves. It is also possible to use a combination of two or more dispersing means.

When the resulting dispersion includes coarse particles which have agglomerated, they are preferably removed by filtration or centrifugal separation. This is because coarse particles tend to become the starting point of peeling or powdering of a coating. A solvent can be added to the dispersion obtained by dispersion treatment in order to adjust the solids content.

This dispersion can be used as is as a coating fluid and applied to a substrate. If the photocatalyst is in the form of fine particles with an average particle diameter of 500 nm or less, a coating can be formed from the dispersion in the absence of a binder, thereby making it possible to form a coating consisting essentially of photocatalyst particles. However, such a coating has a low strength and low adhesion. Therefore, a binder solution may be applied atop the coating to impregnate the spaces between the particles of the photocatalyst with the binder.

A preferred coating fluid contains a binder in addition to the photocatalyst and a medium. The medium may be the same as described above with respect to the dispersion, but it is selected so as to dissolve or emulsify the binder. When a coating fluid is prepared by mixing a binder with the above-described dispersion containing a titanium oxide photocatalyst, it is possible to prepare a coating fluid which has excellent dispersibility of photocatalyst particles, which has good storage stability, and which can form a coating of high photocatalytic activity.

The amount of the binder is adjusted so that the content of the titanium oxide photocatalyst in the resulting coating is 5 - 95 mass percent. A coating which has a photocatalyst content of less than 5 mass percent exhibits almost no photocatalytic activity when irradiated with visible light, while if the content exceeds 95 mass percent, the proportion of the binder component becomes so small that the coating easily peels due to poor film-forming properties. The content of the photocatalyst in the coating is preferably 30 - 90 mass percent, and it is more preferably at least 50 mass percent in order to adequately obtain photocatalytic activity.

As the binder component, metal oxide sols (which become a gel in the coating) of materials such as silica, alumina, titania, magnesia, and zirconia; organic silane compounds; and organic resins such as silicone resins, fluororesins, urethane resins, and acrylic resins can be used. In cases in which decomposition of the binder component may occur due to the oxidizing force of the photocatalyst, it is preferable to use a difficult-to-decompose binder component such as a metal oxide sol or a silicone resin. When good workability or high strength is required of the photocatalytic functional member, the required property can be obtained by adding an appropriate amount of an organic resin such as a fluororesin, an acrylic resin, or a urethane resin to the above-described difficult-to-decompose binder component.

A preferred binder component is a silicon compound such as silica (e.g., silica sol), a hydrolyzate/condensate of an organic silane compound, or a silicone resin. The silica may be a silica sol (a silica colloid) formed by hydrolysis and condensation of a silicate ester (such as ethyl silicate). The organic silane compound which can be used may be a hydrolyzable organic silane compound having film forming properties such as an alkoxysilane or a silane coupling agent.

The coating fluid may further contain one or more other components in addition to those described above. Examples of other components are a titanium oxide photocatalyst which is not responsive to visible light (such as a conventional titanium oxide photocatalyst), and a carrier in the case where a photocatalyst is supported particles on a carrier. A minor component such as a coloring agent (preferably an inorganic pigment) may also be contained in the coating.

Application of the coating fluid to a substrate can be performed by various known techniques in accordance with the properties of the coating fluid and the shape of the substrate to be coated. After application, the applied coating is dried with heating if necessary (in some cases, it is further cured). The drying (curing) temperature is determined depending on the composition of the coating fluid (the type of solvent and binder) and the temperature which the substrate can resist.

The thickness of the photocatalyst-containing coating formed on the substrate is preferably at least 0.5 micrometers. If the coating is thinner than 0.5 micrometers, the amount of the photocatalyst becomes too small, and the photocatalytic visible light activity becomes extremely low. The thickness of the coating can be suitably selected in accordance with the required catalytic performance and cost, but from the standpoint of the stability of catalytic performance and catalytic activity, it is more preferably at least 3 micrometers and still more preferably at least 5 micrometers. There is no particular restriction on the upper limit of the coating thickness, but taking into consideration cost and the saturation of effects, the coating thickness is at most 30 micrometers and preferably at most 25 micrometers.

The above-mentioned second method for producing a photocatalytic functional member is a method in which a raw material in the form of titanium oxide and/or its precursor is previously deposited on the surface of a substrate, and the substrate is then subjected to the same treatment as in the production of photocatalyst particles according to the present invention, i.e., a first step heat treatment in an atmosphere containing a hydrolyzable compound, optional contact with water, and a second step heat treatment at a temperature of 350° C or above successively. Since heat treatment is carried out on the substrate surface, a heat-resistant substrate (such as a metal or ceramic) which can withstand this heat treatment is used.

In this second method, deposition of titanium oxide and/or its precursor to the substrate surface can be carried out by preparing a coating fluid containing a raw material which is titanium oxide and/or its precursor, and applying and drying it in the same manner as described above. Since the deposited raw material must be subjected to heat treatment in the next step, it is preferable that a binder not be used, or that it be present in a decreased amount.

In a preferred method of deposition, a solution-type coating fluid comprising a partially hydrolyzed titanium compound (such as a partial hydrolyzate of a titanium alkoxide) or a titania sol dissolved in a solvent is prepared, and it is then applied to the surface of a substrate and dried, thereby forming a coating consisting essentially of a titanium oxide precursor on the substrate surface. In another preferred method, a coating fluid prepared from particles of titanium oxide or an insoluble precursor thereof and titania sol as a binder is used for application to form a coating consisting essentially of titanium oxide and/or its precursor on the substrate surface. A method for depositing titanium oxide and/or its precursor on the surface of a substrate is not limited to the above-described coating method, and it is possible to use a well-known vapor phase deposition method such as CVD or PVD, although it entails complicated operations and high costs.

Subsequently, in the same manner as described above with respect to the process for the production of a photocatalyst according to the present invention, the substrate is subjected to a first step heat treatment in an atmosphere containing a hydrolyzable compound, then contact treatment with water, and finally a second step heat treatment, whereby the photocatalyst raw material deposited on the substrate surface becomes a titanium oxide photocatalyst responsive to visible light, and a photocatalytic functional member according to the present invention is obtained. When the deposited coating does not contain a binder or when its coating strength is inadequate, a binder-containing solution may be subsequently applied thereto to increase the coating strength.

The material which is deposited on a substrate may be particles of the raw material which has undergone only the above-described first step heat treatment. In this case, the particles are preferably dispersed in a medium which preferably contains water with or without a binder, and the resulting dispersion is applied to the substrate to deposit the particles on the substrate. As a result, contacting with water and deposition on the substrate can be simultaneously achieved. Then, the substrate is subjected to the second step heat treatment, and if necessary impregnation of the deposited particles with a binder is performed, thereby producing a photocatalytic functional member according to the present invention.

The above-described titanium oxide photocatalyst and photocatalytic functional member according to the present invention exhibit a photocatalytic activity when irradiated not only with ultraviolet light but also with visible light having a wavelength of at least 400 nm. As a result, they can exert excellent photocatalytic effects for decomposing, removing, and rendering harmless various harmful substances and fouling.

In actual use, they are preferably used in an environment in which the photocatalyst can contact substances which are to be decomposed and in which the photocatalyst can at the same time be irradiated with visible light. The light source can be any type capable of emitting light which includes visible radiations having a wavelength of at least 400 nm. For example, sunlight, fluorescent lamps, halogen lamps, black lights, xenon lamps, and mercury lamps can be used.

Some examples of harmful substances include gases contained in the atmosphere such as NOₓ, SOₓ, freon, ammonia, and hydrogen sulfide; organic compounds such as aldehydes, amines, mercaptans, alcohols, BTX, and phenols; organohalogen compounds such as trihalomethane, trichloroethylene, and freon; various agricultural chemicals such as herbicides, germicides, and insecticides; biological oxygen-demanding substances such as proteins and amino acids; surface active agents; as well as inorganic compounds such as cyanide compounds and sulphur compounds; various heavy metal ions; and microorganisms such as bacteria, actinomycetes, fungi, algae, and viruses. These substances may be present in water. Fouling refers to substances which directly deposit on the surface of a photocatalyst or a photocatalytic functional member and includes microorganisms such as *E-coli,* staphylococci, *Pseudomonas aeruginosa,* and mold; oil, tobacco resin, fingerprints, rain streaks, and mud.

A titanium oxide photocatalyst responsive to visible light according to the present invention becomes superhydrophilic when irradiated with light. With a functional member having a photocatalyst according to the present invention on its surface, such superhydrophilicity provides the substrate surface with anti-fogging properties, antifouling properties, and dust-proofing properties.

The following examples illustrate the present invention but are not intended to limit it in any way.

### Example 1

### [Preparation of a titanium oxide photocatalyst]

An aqueous TiCl₄ solution (9.3% as Ti metal concentration) was neutralized by adding aqueous ammonia (14%) dropwise thereto with stirring at room temperature until the pH reached 4.2. The resulting neutralization reaction mixture was then aged by allowing to stand for 1 week (168 hours) at 20 ∀ 3° C. The pH at the end of aging was 4.0, so the decrease in pH between before and after aging was 0.2. The solids which were precipitated were then collected by filtration with filter paper (5B), and after washing with water, they were vacuum dried at 80° C to obtain a titanium (hydr)oxide powder for use as a raw material.

200 grams of the resulting raw material powder were placed into a kiln-type heat treatment apparatus, and after the atmosphere in the apparatus was replaced (purged) with nitrogen, the temperature was increased to 350° C. Then, a hydrogen gas containing 2.0 volume percent of TiCl₄ as a hydrolyzable metal compound was introduced into the apparatus and was contacted with the raw material powder for 20 minutes to carry out a first step heat treatment. Then, the interior of the apparatus was again replaced with nitrogen gas and gradually cooled to room temperature.

The powder which was removed was poured into distilled water at room temperature and thoroughly rinsed with stirring. The solids were filtered out and rinsing was repeated in the same manner until the filtrate became neutral. The resulting solids were dried at 80° C to obtain a dry powder.

The dry powder which underwent contact treatment with water was placed into a kiln-type heat treatment apparatus and subjected to heat treatment for 2 hours in air having a moisture content of approximately 2.0 volume % (with an error of at most ∀ 0.5%) at 450° C to prepare a titanium oxide photocatalyst. The nitrogen content of this photocatalyst was determined by the Kjeldahl process (decomposing in sulfuric acid, recovering ammonia gas by steam distillation, allowing the distilled ammonia to be absorbed in a boric acid solution, and determining the nitrogen content by neutralization titration with sulfamic acid) and was found to be approximately 0.008 weight %.

### [Thermal desorption spectroscopy]

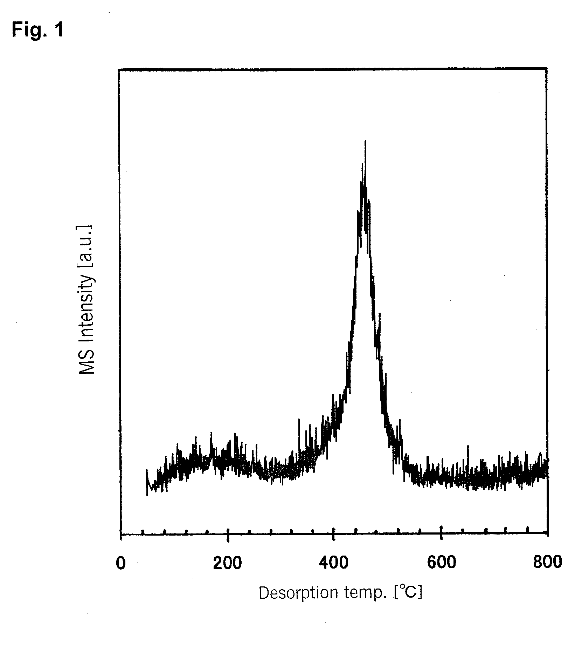

Thermal desorption spectroscopy (TDS) was carried out using a high-precision thermal desorption spectrometer (Model EMD-WA1000S) manufactured by Ube Industries. Measurement was carried out by placing a sample on a quartz sample boat and raising its temperature at a rate of 10° C per minute in a vacuum (#10⁻⁶ torr). The mass fragment spectrum up to a temperature of 800° C for m/e = 28 measured in this manner for the titanium oxide photocatalyst prepared in Example 1 is shown in Figure 1.

### [Measurement of photocatalytic activity (acetaldehyde decomposition test)]

A sample (0.3 g) was placed on a square dish measuring 40 mm on a side, the dish was inserted into a quartz reaction cell, the reaction cell was connected to a closed circulation line (total inner volume of approximately 3.8 L), and a gas having acetaldehyde (approximately 240 ppm) diluted with nitrogen gas containing approximately 20 volume % of oxygen was introduced into the system. While the gas was circulating therein, the reaction cell was irradiated with light from a 500-watt xenon lamp which had passed through a UV filter (Toshiba L42). The reaction was monitored by measuring the concentration of carbon dioxide (CO₂) which was formed by decomposition of acetaldehyde with the passage of time using an automatic gas chromatograph connected to the circulation line. Photocatalytic activity was evaluated from the rate of formation of carbon dioxide. The results are compiled in Table 1.

### Comparative Example 1

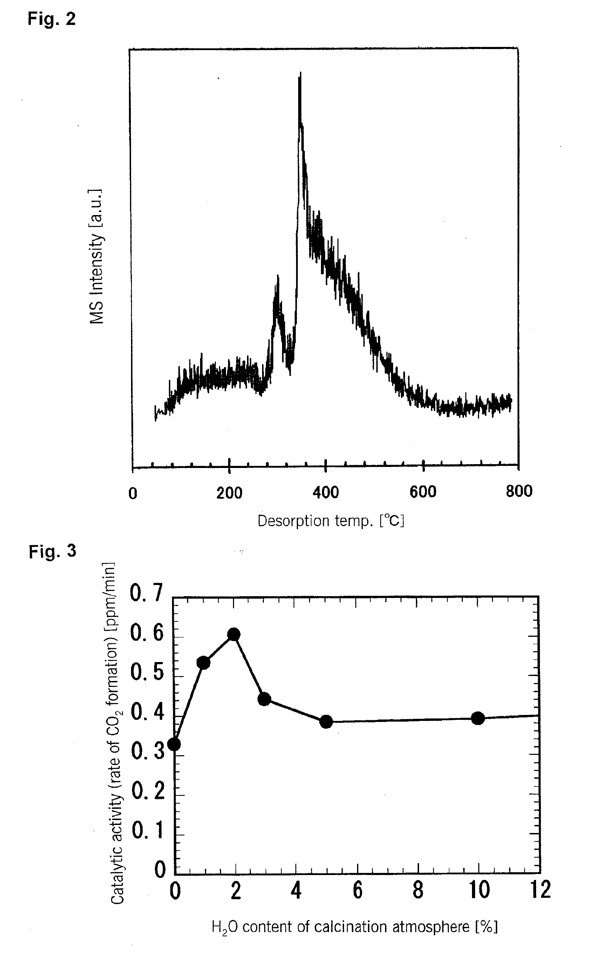

TDS analysis and measurement of photocatalytic activity were carried out in the same manner as in Example 1 for a typical commercially available titanium oxide photocatalyst responsive to visible light. The results of TDS (a mass fragment spectrum for m/e = 28) are shown in Figure 2, and the results indicating photocatalytic activity are shown in Table 1. The nitrogen content of this photocatalyst was approximately 0.05 weight %.

**Table 1**

| Example No. | Peak having smallest half band width | | Photocatalytic activity (rate of CO₂ formation) (ppm/minute) |
|---|---|---|---|
| | Desorption temperature (°C) | Half band width (°C) | |
| Example 1 | 451 | 39.9 | 0.46 |
| Comparative Example 1 | 370 | | 0.32 |

In the mass fragment spectrum for m/e = 28 obtained by TDS measurement of the titanium oxide of Example 1, there was no peak at a temperature higher than 600° C, the peak having the smallest half band width was in the range of 400 - 600° C, and the half band width of this peak was approximately 40° C. There was no peak other than this peak (and accordingly this was the highest temperature peak), which suggests that the state of nitrogen in the titanium oxide was substantially uniform.

In contrast, although the titanium oxide of Comparative Example 1 did not have a peak at a temperature higher than 600° C in the above-described mass fragment spectrum, the peak having the smallest half band width was at 370° C, so the requirements prescribed by the present invention were not satisfied.

As for photocatalytic activity, the rate of formation of CO₂ by the titanium oxide photocatalyst of Example 1 was nearly 1.5 times that of the titanium oxide photocatalyst of the comparative example. From this, it can be seen that a high photocatalytic activity can be obtained by satisfying the requirements prescribed by the present invention concerning a mass fragment spectrum in thermal desorption spectroscopy.

### Example 2

A titanium oxide photocatalyst was prepared in the same manner as in Example 1 except that the atmosphere for the second step heat treatment was a nitrogen atmosphere in which the moisture content was varied, and photocatalytic activity was measured by the same method except that the light source was a 500-watt mercury lamp. The results are compiled in Figure 3. It can be seen that when the heat treatment is performed in a gas atmosphere having a moisture content in the range of 0.5 - 4.0 volume %, a titanium oxide photocatalyst having high visible light activity is obtained.

### Comparative Example 2

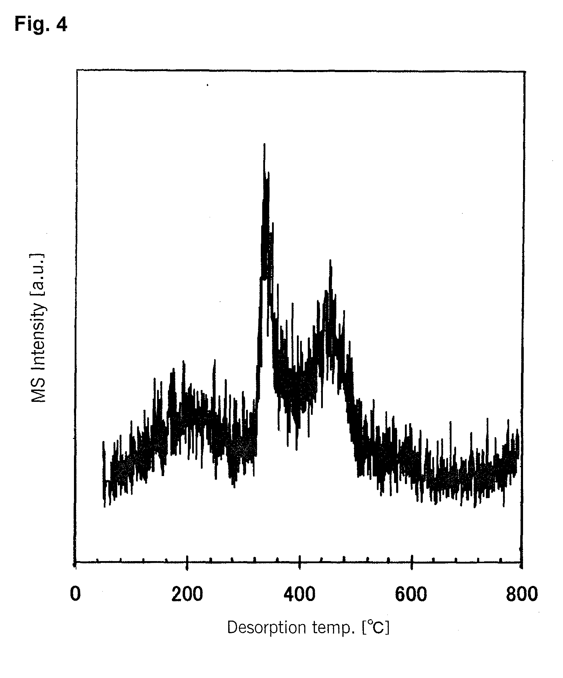

The TDS spectrum of a sample for which the moisture content of the atmosphere in the second step heat treatment in Example 2 was 5% is shown in Figure 4. This titanium oxide had a peak with the smallest half band width in a mass fragment spectrum for m/e = 28 at approximately 360° C, so it did not satisfy the requirements prescribed by the present invention. If the moisture content is at least 5%, photocatalytic activity decreases as shown in Figure 3. The reason for this is thought to be a change in the state of nitrogen shown by a mass fragment spectrum.

### Example 3

This example illustrates the production of a photocatalytic functional member according to the present invention.

Using a media mill, 20 parts of the titanium oxide photocatalyst prepared in Example 1 were dispersed in 180 parts of distilled water with the aid of zirconia beads measuring 0.1 mm in diameter to prepare a photocatalyst dispersion having a solids content of 10 weight %. The particle diameter of the titanium oxide photocatalyst in this dispersion was measured using a particle size analyzer (LA700) manufactured by Horiba, Ltd. and was found to be approximately 65 nm. The average particle diameter of the photocatalyst particles before dispersion treatment was approximately 35 µm.

To 100 parts of this photocatalyst dispersion, 40 parts of an aqueous solution containing methyltriethyloxysilane which had been partially hydrolyzed with nitric acid (solids content of 20 mass % as converted to SiO₂), 5 parts of a silicone resin, 50 parts of ethanol, and a minute amount of a silicone-based surface active agent were added, and thoroughly mixed for 60 minutes using a paint shaker to prepare a coating fluid. The content of a titanium oxide photocatalyst contained in this coating fluid was 43.4% with respect to the total amount of non-volatile components in the coating fluid.

A steel sheet coated with a photocatalyst was produced by applying this coating fluid to a precoated steel sheet in the following manner. First, a precoated steel sheet (having a thickness of 0.3 mm, precoated with a polyester-based coating composition) was coated with a commercially available silicone-based primer to form a primer layer having thickness of 0.6 micrometers. The coating fluid according to the present invention was then applied atop this primer layer using a bar coater, and the applied coating was dried for 1 minute at 200° C to produce a photocatalytic functional steel sheet having a coating containing a titanium oxide photocatalyst according to the present invention atop a precoated steel sheet as a substrate. The thickness of the coating was approximately 2.5 micrometers.

A sample of this photocatalytic functional steel sheet was used to perform decomposition of acetaldehyde in the same manner as described in Example 1 (except that a square sample measuring 40 mm on a side was used). The result was that the rate of formation of CO₂ was 0.08 ppm/minute.

### Comparative Example 3

Using a conventional titanium oxide photocatalyst powder (ultraviolet light type, and specifically ST01 manufactured by Ishihara Sangyo Kaisha, Ltd.) as a titanium oxide photocatalyst, a photocatalyst dispersion, a coating fluid, and a photocatalytic functional steel sheet were prepared in the same manner as in Example 3.

An acetaldehyde decomposition test was carried out using this photocatalytic functional steel sheet under irradiation with visible light in the same manner as in Example 3. The rate of formation of CO₂ in the acetaldehyde decomposition test was less than 0.01 ppm/minute.

### Example 4

XPS measurement was carried out on the titanium oxide photocatalyst prepared in Example 1, which was determined by chemical analysis to contain 0.008 weight % of nitrogen.

### [XPS measurement]

XPS measurement was carried out using a scanning x-ray photoelectron spectroscope (Model PHI Quantum 2000) manufactured by Ulvac Phi, Inc. The measurement conditions were as follows:
X-ray source: mono-Al Kα rays (44.8 W, 17 kV),
Take-off angle: 45 degrees,
Diameter of x-ray beam: approximately 200 µm,
Neutralizing gun: 1.0 V, 20 mA (using Ar + low speed ion gun),
Energy resolution: conditions under which the half band width of the Ag 3d 5/2 peak (368.1 eV) of pure Ag is approximately 0.75 eV,
Vacuum: approximately 2.0 x 10⁻⁸ torr,
Ar sputtering: with or without sputtering (for 10 seconds).

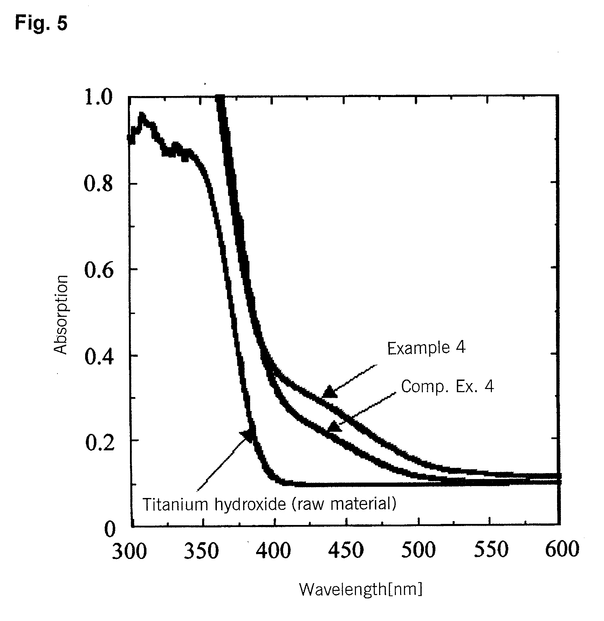

Figure 5 shows the XPS spectrum of the N-1s inner shell level prior to sputtering. The nitrogen content calculated based on the XPS spectrum was 1.7 atomic % and 1.4 atomic % before and after sputtering, respectively.

### Comparative Example 4

For comparison, a titanium oxide photocatalyst was prepared in the same manner as in Example 1 except that the first step heat treatment and the subsequent contact treatment with water were not carried out. Namely, the titanium (hydr)oxide powder prepared as a raw material powder in Example 1 was subjected directly to heat treatment for 2 hours at 450° C in air containing approximately 2.0 volume % (error of at most ∀ 0.5%) of moisture to obtain a titanium oxide photocatalyst. The nitrogen content of this titanium oxide photocatalyst was determined to be 0.007 weight % by the same chemical analysis as in Example 1.

In the mass fragment spectrum for m/e = 28 by thermal desorption spectroscopy of the resulting titanium oxide photocatalyst, there was no peak at a temperature higher than 600° C, but the peak having the smallest half band width was at 380° C, so it did not satisfy the conditions of the present invention.

The XPS spectrum of the N-1s inner shell level obtained from this comparative titanium oxide photocatalyst prior to sputtering is also shown in Figure 5. The nitrogen content calculated based on this XPS spectrum was 0.5 atomic % both before and after sputtering.

As shown in Figure 5, with a titanium oxide photocatalyst according to the present invention (Example 4), a peak appeared in the vicinity of 400 eV ∀ 1.0 eV. In contrast, with the titanium oxide photocatalyst of Comparative Example 4, although a peak appeared at approximately the same location, the peak strength was smaller compared to the photocatalyst according to the present invention. For either photocatalyst, no peak was observed other than the peak in the vicinity of 400 eV ∀ 1.0 eV. With a titanium oxide photocatalyst according to the present invention, this peak was also ascertained after sputtering, but with the titanium oxide photocatalyst of Comparative Example 4, this peak could not be observed after sputtering.

The nitrogen contents calculated from the XPS spectrum for the N-1s inner shell level before and after sputtering for Example 4 and Comparative Example 4 are shown in Table 2 together with the nitrogen contents determined by chemical analysis (the value obtained by converting the result in weight % into atomic %) and the degree of surface concentration of nitrogen (the ratio of the content obtained by XPS/the N content obtained by chemical analysis). Table 2 also shows the measured results of catalytic activity measured in the same manner as in Example 1.

**Table 2**

| Example No. | %N (XPS analysis) | | %N (chemical analysis) | Degree of surface concentration of nitrogen | | Photocatalytic activity (ppm/min) |
|---|---|---|---|---|---|---|
| | Before sputtering | After sputtering | | Before sputtering | After sputtering | |
| Example 4 | 1.7 | 1.4 | 0.046 | 37.0 | 30.4 | 0.46 |
| Comparative Example 4 | 0.5 | 0.5 | 0.041 | 12.2 | 12.2 | 0.25 |

| | | | | | | |
|---|---|---|---|---|---|---|
| Units in %N are atomic %. The chemical analysis data were converted from weight %. The degree of surface concentration of nitrogen is the ratio of %N from XPS analysis/that from chemical analysis. | | | | | | |

With a titanium oxide photocatalyst of Example 4 according to the present invention, the ratio of the N content calculated by XPS measurement to the N content found by chemical analysis was 37.0 before sputtering and 30.4 after sputtering, both exceeding 20. In contrast, with the titanium oxide photocatalyst of Comparative Example 4, this ratio was 12.2 both before and after sputtering and was smaller than 20. XPS measurement is measurement of the surface layer, so this result means that in the titanium oxide photocatalyst according to the present invention, the degree of concentration of nitrogen locally in the vicinity of the surface is higher. Photocatalytic visible light activity for the titanium oxide according to the present invention (Example 4) was almost 2 times as large compared to that for Comparative Example 4.

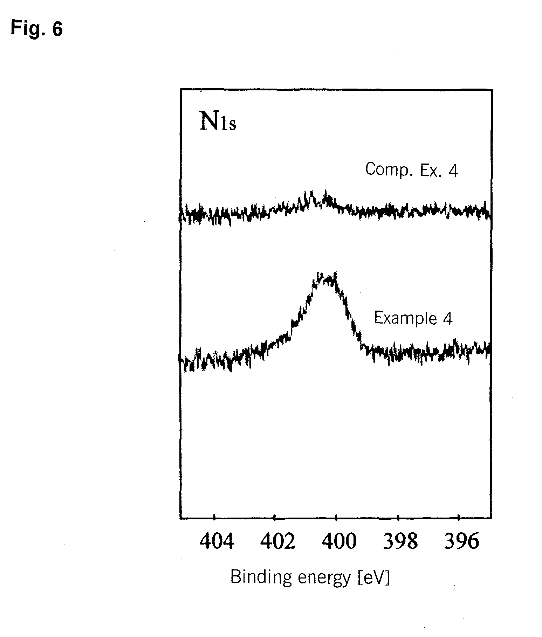

Figure 6 shows the light absorption spectrum from the ultraviolet to the visible light region of the titanium (hydr)oxide raw material, the titanium oxide photocatalyst according to the present invention obtained in Example 4, and the titanium oxide photocatalyst obtained in Comparative Example 4. The measurinig device was Model MCPD2000 manufactured by Otsuka Electronics Co., Ltd.

As can be seen from Figure 6, the visible light absorption (for a wavelength longer than 380 nm) of the photocatalyst according to the present invention (Example 4) was stronger than that of the photocatalyst of Comparative Example 4. The nitrogen contents obtained by chemical analysis of these two photocatalysts were of the same level as each other. From this fact, it is conjectured that with a photocatalyst according to the present invention, the absorption of visible light was strengthened by concentration of nitrogen at the surface. An increase in light absorption is advantageous at increasing activity from the standpoint of efficiency of utilization of light. Concentration of nitrogen at the surface is also predicted to have the effect of making it difficult for recombination of carriers to occur in bulk, which is considered one of the causes of a decrease in the activity of a photocatalyst. It is conjectured that a titanium oxide photocatalyst according to the present invention exhibits a high visible light photocatalytic activity due to these two effects (strengthening of visible light absorption and suppression of recombination of carriers).

Although the present invention has been explained with respect to specific embodiments, the present invention is not limited to these embodiments.

## Claims

1. A titanium oxide photocatalyst responsive to visible light **characterized in that** in its mass fragment spectrum measured from room temperature to 800° C by thermal desorption spectroscopy in which the ratio (m/e) of the mass number m to the electric charge e of ions is set to 28, there is no peak having a half band width of at most 300° C at a temperature higher than 600° C, with the peak having the smallest half band width being in the temperature range of 400 to 600° C.

2. A titanium oxide photocatalyst responsive to visible light **characterized in that** the nitrogen content of the catalyst calculated based on the peak which appears in the range of 400 eV ∀ 1.0 eV in an N1s shell bonding energy spectrum obtained by XPS measurement is at least 20 times larger than the nitrogen content determined by chemical analysis.

3. A photocatalyst responsive to visible light as set forth in claim 1 wherein the peak having the smallest half band width has a half band width of at most 100° C.

4. A photocatalyst responsive to visible light as set forth in claim 1 or claim 3 wherein the peak having the smallest half band width is the peak having the highest temperature.

5. A titanium oxide photocatalyst as set forth in any one of claims 1 - 4 which contains at most 0.1 weight % of nitrogen in the catalyst as determined by chemical analysis.

6. A process for producing a titanium oxide photocatalyst as set forth in any one of claims 1 - 5 **characterized by** comprising a step of subjecting a raw material selected from titanium oxide and a precursor thereof to heat treatment in an atmosphere containing a hydrolyzable metal compound, and a step of subjecting the heat treated material to additional heat treatment in a gas having a moisture content of 0.5 - 4.0 volume % at a temperature of 350° C or above.

7. A process as set forth in claim 6 which further includes a step of contacting the heat treated material with water prior to the step of additional heat treatment of the heat treated material.

8. A process as set forth in claim 6 wherein the raw material is titanium oxide and/or titanium hydroxide obtained by a method comprising neutralizing an aqueous solution of an acidic titanium oxide compound with a nitrogen-containing base under conditions such that the reaction mixture has a pH of 7 or below at the end of the neutralization reaction.

9. A process for producing a titanium oxide photocatalyst as set forth in claim 8 wherein the neutralization reaction is carried such that when the reaction mixture at the end of the neutralization reaction is aged by allowing to stand for 72 hours at 20° C, the decrease in the pH between before and after aging is 0.5 or less.

10. A photocatalytic functional member responsive to visible light **characterized by** comprising a substrate which has a titanium oxide photocatalyst as set forth in any one of claims 1 - 5 deposited on the surface thereof.

11. A photocatalytic functional member responsive to visible light **characterized by** comprising a substrate which has a coating comprising a titanium oxide photocatalyst as set forth in any one of claims 1 - 5 and a binder component on the surface of the substrate, with the content of the photocatalyst in the coating being 5 - 95 mass %.

12. A photocatalytic functional member as set forth in claim 10 or 11 wherein the substrate is made primarily of a metal.

13. A photocatalyst dispersion **characterized by** comprising a titanium oxide photocatalyst as set forth in any one of claims 1 - 5 as a dispersoid.

14. A photocatalytic coating fluid **characterized by** being prepared by using a photocatalytic dispersion as set forth in claim 13.
